(19) Europäisches Patentamt
European Patent Office
Office européen des brevets

(11) **EP 2 480 311 B1**

(12) **EUROPEAN PATENT SPECIFICATION**

(45) Date of publication and mention
of the grant of the patent:
**30.10.2013 Bulletin 2013/44**

(51) Int Cl.:
***B01D 53/14*** (2006.01)

(21) Application number: **10754767.1**

(22) Date of filing: **22.09.2010**

(86) International application number:
**PCT/EP2010/063963**

(87) International publication number:
**WO 2011/036171 (31.03.2011 Gazette 2011/13)**

(54) **CARBON DIOXIDE ABSORBENT**

KOHLENDIOXIDABSORPTIONSMITTEL

ABSORBANT DE DIOXYDE DE CARBONE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **22.09.2009 NO 20093043**

(43) Date of publication of application:
**01.08.2012 Bulletin 2012/31**

(73) Proprietor: **Aker Engineering & Technology AS
1326 Lysaker (NO)**

(72) Inventors:
• **MEJDELL, Thor
NO-7030 Trondheim (NO)**

• **HOFF, Karl Anders
NO-7022 Trondheim (NO)**
• **JULIUSSEN, Olav
NO-7049 Trondheim (NO)**
• **SVENDSEN, Hallvard F.
NO-7050 Trondheim (NO)**
• **TOBIESEN, Andrew
NO-7030 Trondheim (NO)**
• **VASSBOTN, Terje
NO-7021 Trondheim (NO)**

(74) Representative: **Protector IP Consultants AS
Oscarsgate 20
0352 Oslo (NO)**

(56) References cited:
**EP-A2- 0 875 280**

## Description

## Field of invention

The present invention relates to an improved method for capturing of $CO_2$ from a combustion gas, and to an improved amine absorbent for $CO_2$.

## Background

Capture of $CO_2$ from a mixture of gases in an industrial scale has been known for decades, i.e. for separation of natural gas and $CO_2$ from sub terrain gas wells to give natural gas for export and $CO_2$ for return to the sub terrain structure.

The growing concern on environment and the greenhouse effect of $CO_2$ from combustion of fossil fuels has caused a growing interest in $CO_2$ capture from major points of emission of $CO_2$ such as thermal power plants.

US 5.618.506, and EP 0 558 019, both to The Kansai Electric Power Co., Inc., and Mitsubishi Jukogyo Kabushiki Kaisha, and the citations indicated therein, give a general background of process and absorbents for capturing of $CO_2$.

Industrial $CO_2$ capturing plants include an absorber, in which a liquid absorbent is brought into countercurrent contact with the gas to be treated. A "purified" or low $CO_2$ gas is withdrawn at the top of the absorber and is released into the atmosphere, whereas a $CO_2$ rich absorbent is withdrawn from the bottom of the absorber. The rich absorbent is regenerated in a regeneration column where the rich absorbent is stripped by countercurrent flow with steam that is generated by heating of regenerated absorbent at the bottom of the regeneration column. The regenerated absorbent is withdrawn from the bottom of the regeneration column and is recycled into the absorber. A $CO_2$ rich gas, mainly comprising steam and $CO_2$ is withdrawn from the top of the regeneration column. The $CO_2$ rich gas is treated further to remove water, and compressed before the $CO_2$ is sent for deposition or other use.

Capture of $CO_2$ is, however, an energy demanding process, as the binding of $CO_2$ to the absorbent is an exothermal reaction and the regeneration is an endothermal reaction. Accordingly, heat is to be added to the regeneration column to regenerate the absorbent and release the $CO_2$. This heat demand is a major operating cost for a plant for $CO_2$ capture. A reduction of the heat requirement for regeneration of the absorbent is therefore sought to reduce the energy cost for the $CO_2$ capture.

Amines having a less exothermic reaction when absorbing $CO_2$ do, however, normally have slower reaction kinetics. Slower reaction kinetics will require a longer contact time between the $CO_2$ containing gas and the absorbent. A longer contact time will require a larger absorber for handling the same gas volume.

Many different amines and combinations have been suggested as absorbents for $CO_2$, the different amines having $CO_2$ absorption capabilities, see e.g. the above mentioned patents. Examples of suggested amines for the aqueous solutions to be used as absorbents are alkanolamines such as e.g. monoethanol amine (MEA), diethanol amine (DEA), triethanol amine, dimethyldiethanolamine, diisopropanol amine, diglycol amine, methyl monoethanol amine (MMEA), 2-amino-2-methyl-1-propanole (AMP), 1-(2aminoethyl) -piperazine (AEP). It is also known to combine two or more amines having different characteristics. The known mixtures often comprises one amine having low heat of absorption and slow reaction kinetics and a minor amount of an amine that is less favorable with relation to heat of absorption but having fast reaction kinetics, to combine their favorable characteristics. EP875280, The Kansai Electric Power Co, Inc, describes the use of AEP as promoter in an AMP based absorbent, exemplified with an aqueous solution of 30 % by weight of AMP and 1.5% by weight of AEP.

MEA is also commonly used as a reference absorbent in tests for possible new absorbents.

The characteristics of the solvent, play a major role in determining both equipment sizes and process energy requirement. The following factors are considered to be the most important when choosing a new and more efficient solvent:

- The energy required to regenerate the absorbent is a major fraction of the total energy consumption for $CO_2$ capture. This energy is related to the **heat of absorption,** as the exothermic reaction taking place in the absorber will have to be reversed by addition of heat in the reboiler. An absorbent having a high heat of absorption will normally result in higher heat loss than an absorbent having lower heat of absorption due to heat loss in the process as such.

- The **cyclic capacity** of the solvent is defined as the difference between the $CO_2$ concentration in the solvent leaving the absorber and that leaving the reboiler. It gives the amount of $CO_2$ that can be absorbed pr. $m^3$ of solvent circulating through the process, resulting i.a. in lower reboiler duty, reduced electricity consumption in pumps, and possible downsizing of equipment which will again result in lower investment costs.

- **Evaporation loss** is a problem which is brought down by using a water wash section on top of the absorber. It is desirable to find a reagent with low or preferably negligible volatility, thus reducing or completely removing the need for the water wash section.

- **Solubility** in water is an important prerequisite. Some amines with bulky non-polar parts show limited solubility in water. Also some amino acid salts and inorganic salt solutions have similar properties, and this may lead to formation of precipitates.

- **Chemical stability** is an important property of the solvent. A problem with MEA is its vulnerability towards oxidative degradation when exposed to an exhaust gas, see e.g."Catalysts and inhibitors for MEA oxidation", Sexton, Andrew J., et al, Energy Procedia 1 (2009), 1179-1185.

- It is important that the solvents themselves, as well as their possible degradation products exhibit limited **corrosivity.**
- **Foaming** is also an undesirable property. This, if not controlled, may lead to gas channeling and mal-distribution of liquid flow in the absorption tower, thus reducing its performance drastically.
- **Toxicity and environmental impact** of the compound used is a very important property. Most amines will have certain negative properties such as being skin irritant. However, compounds classified as toxic should be excluded, especially considered the potential world wide deployment of the technology.
- Finally, **cost and availability** plays an important role in the evaluation. Both cost and availability are to some extent functions of demand. This means that an expensive component may become less expensive if demand is substantially increased.

The energy cost is assumed to be the predominant running cost for a plant for $CO_2$ capture. The heat consumption is a combination of three factors (heat of absorption, heat for stripping and sensible heat loss in amine/amine exchanger) Energy cost varies with type of energy (low temp, high temp, electricity). Energy cost is most important economical parameter.

There are some other trade-offs that recently have become topical, related to solvent degradation and environmental impact in particular:

It must be noted that low volatility solvents may require special approaches to the reclaimer technology and design. An obvious trade off exists between high volatility, facilitating a simple thermal reclaimer at the price of more difficult water wash for emissions control and low volatility. Low volatility is good for emissions control (simpler water wash) but requires the reclaimer to operate under vacuum, and generally makes thermal reclaiming more difficult and less efficient. It is known from literature that thermal reclaimers may facilitate further thermal degradation in the reclaimer itself.

The objective of the present invention is to provide an improved absorbent and an improved method for capturing of $CO_2$ from a $CO_2$ containing gas using the absorbent, where the improved absorbents has improved characteristics with regard to the criteria mentioned above, compared with the prior used absorbents, such as exemplified with the MEA reference absorbent. Specifically, it is an object to provide an absorbent having a low energy requirement and good chemical stability. It is also an object to provide a method for use of the new absorbent which makes use of these characteristic and results in low energy consumption with minimal environmental impact.. Other objects of the invention will be clear by reading the description.

## Summary of the invention

According to a first aspect, the present invention relates to an improved $CO_2$ absorbent comprising an aqueous solution of 2-amino-2-methylpropanol (AMP) and 1-(2-aminoethyl)-piperazine (AEP), wherein the molar concentration of AMP is between 4.5M and 2 M, and the molar concentration of AEP is between 0.5 M and 2.5 M.

According to a second aspect, the present invention relates to a method for capturing $CO_2$ from an exhaust gas, wherein the exhaust gas is contacted with a liquid absorbent comprising an aqueous solution of 2-amino-2-methylpropanol (AMP) and 1-(2-aminoethyl)-piperazine (AEP), wherein the molar concentration of AMP is between 4.5M and 2 M, and the molar concentration of AEP is between 0.5 M and 2.5 M..

Specific embodiments of the two aspects are indicated in the dependent claims.

## Short description of the figures

Figure 1 is a principle drawing of a pilot plant used for testing absorbents,
Figure 2 is a graph illustrating the specific reboiler duty as a function to rich loading of different absorbents,
Figure 3 is a principle drawing of an apparatus for screening experiments,
Figure 4 is a graph illustrating the rate of absorption versus $CO_2$ loading for different solvents,
Figure 5 is a graph illustrating the rate of absorption versus $CO_2$ loading for comparative examples,
Figure 6 is a principle drawing of an apparatus for measurement of absorption equilibrium at different temperatures,
Figure 7 is a graph illustrating loading versus partial pressure of $CO_2$ at different temperatures, and
Figure 8 is a graph illustrating oxidative degradation of an amine absorbent

## Detailed description of the invention

The different criteria for selection of solvents as described in the introductory part are often contradictory to each other. Selections for improvements with regard to one criterion very often results in less favorable properties with regard to one or more of the other criteria.

It has surprisingly been found that combinations of 2-amino-2-methylpropanol (AMP) and 1-(2-aminoethyl)-piperazine (AEP) within the individual concentrations and the relative concentrations as indicated in the attached claims results in solvents for absorption of $CO_2$ that are very favorable especially with regard to energy requirement for solvent regeneration, chemical stability, acceptable vapor pressure, total heat consumption of the process, cyclic capacity and kinetics.

AMP is a sterically hindered amine having low heat of absorption, and high chemical stability in the process. It is, however, relatively slow reacting. It is preferred that the total molar concentration of AMP and AEP in a $CO_2$ absorbent is between 3 M and 5 M, more preferred between 3.5 M and 4.5 M, such as about 4 M.

The concentration of AMP may e.g. be from 3 M to 2 M, more preferred from 3 M to 2.5 M.. AMP is a sterically hindered amine having low heat of absorption, and high chemical stability in the process. It is, however, relatively slow reacting.

AEP is a $CO_2$ absorbent having very fast kinetics and is chemically very stable under the condition of the process. AEP has a low volatility, which reduces the environmental concerns of the compound. The molar concentration of AEP in a solvent for $CO_2$ capture is preferably between 0.5 M and 2.5 M, more preferred between 0.8 M and 1.5 M, such as about 1 M. Concentrated aqueous solutions of AEP are relatively viscous. High viscosity reduces the $CO_2$ absorptive properties of the solvent. A molar concentration of about 1 M AEP seems to be a reasonable compromise between viscosity and absorptive activity.

The use of AEP as promoter for an AMP based absorbent, mentioned in the introductory part of the description, relates to using a minor amount of AEP in an aqueous solution of AMP, exemplified with 30 % by weight of AMP and 1.5 % by weight of AEP. The mentioned percentages correspond to approximately 3.4 M AMP and 0.1 M AEP.

A presently preferred solvent for $CO_2$ capture is an aqueous solution of 3M AMP and 1 M AEP, a solution that seems to be a good compromise between viscosity and absorptive activity. This mixture results in mixture having an absorptive activity at about the same level as the most used reference solvent, 30 wt.% MEA (=5 M), due to high absorptive activity of AEP having two absorptive active amine groups, one primary and one secondary amine group. The third, and tertiary amine group, is not expected to give any contribution to the absorption.

Tests have been performed to investigate the properties of the present solvent compared with other known solvents for $CO_2$ capture.

**Pilot plant runs**

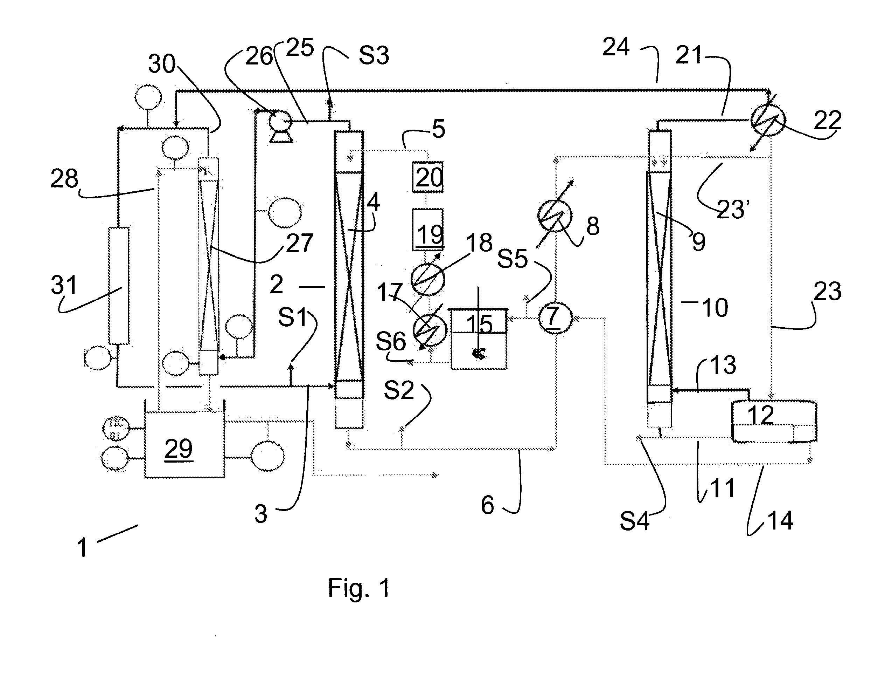

Tests were performed at a pilot plant 1 as illustrated in figure 1.
Artificial exhaust gas mainly comprising nitrogen, $CO_2$ and water is introduced into an absorber 2 through an exhaust gas line 3. The exhaust gas is brought in countercurrent flow to an absorbent to be tested in a contact zone 4 in the absorber 2.

The absorbent is introduced through an absorbent line 5 at the top of the absorber, flows trough the contact section and absorbs $CO_2$ from the exhaust gas, and is collected at the bottom of the absorber 2. The $CO_2$ rich absorbent collected at the bottom of the absorber is withdrawn through a rich absorbent line 6 and is heated in a heat exchanger 7 and a cooler 8 before the absorbent is introduced at the top of a contact zone 9 of a regenerator 10, where the absorbent is brought in countercurrent flow to steam introduced at the bottom of the contact section 9 to strip the absorbent for $CO_2$.

The stripped absorbent is collected at the bottom of the regenerator 10 and withdrawn trough an absorbent line 11 and introduced into a reboiler 12, heating the absorbent to produce steam that is introduced into the regenerator 10 through a steam line 13. Regenerated, or lean, absorbent is withdrawn from the reboiler 12 through a lean absorbent line 14 and is cooled against the rich absorbent in the heat exchanger 7 before it is introduced into a storage and mixing tank 15.

The lean absorbent is withdrawn through line 5. The temperature of the absorbent in line 5 is controlled by a heater 17 and a cooler 18. The absorbent is thereafter filtered through a coal filter 19 and a particle filter 20 before the lean absorbent is introduced at the top of the contact section of the absorber as described above.

$CO_2$ and steam are collected at the top of the regenerator 10 and is withdrawn through a line 21. The withdrawn gas is cooled and condensed water is collected in a condenser 22. Water collected in the condenser is withdrawn through a condensate line 23 and is introduced into the reboiler, or is introduced at the top of the contact zone 9 of the regenerator 10 through a line 23'

Dried $CO_2$ is withdrawn from the condenser through a $CO_2$ line 24 and is recycled in the plant as $CO_2$ for the artificial exhaust gas as described in more detail below.

$CO_2$ depleted exhaust gas, here mainly nitrogen, is withdrawn from the top of the absorber 2 through a line 25 by means of a pump 26 and introduced to a washing section 27 for washing of the gas with water that is introduced through a water line 28. The washing water is withdrawn from the bottom of the washing section into a water tank 29. The water in the water tank 29 is recycled to the washing section via water line 28.

The washed gas is leaving the washing section through a line 30, into which $CO_2$ from the $CO_2$ line 24 is mixed to make up the artificial exhaust gas. The artificial exhaust gas is heated in a heater 31 before it is introduced into the absorber.

Different sampling lines S1 to S6 is provided to take gas or liquid samples for analysis. The sampling point S1 is arranged to withdraw samples for testing the gas in line 3, sampling point S2 is arranged to withdraw liquid from line 6, sampling point S3 is arranged to withdraw gas from line 25, sampling point S4 is arranged to withdraw liquid from line 11, sapling point S5 is arranged to withdraw liquid from line 14, and sampling point S6 is arranged to withdraw liquid from the tank 15.

Test runs were performed for determining the specific reboiler duty (SRD) in MJ/kg $CO_2$) as a function

of rich loading (mole $CO_2$ per mole amine) for the present absorbent containing 3M AMP and 1 M AEP (Ex.1) were compared to three different reference absorbents, RA1 containing 2.5M 2-amino-2-methylpropanol (AMP) and 2.5M 2-methylaminoethanol (MMEA), RA2 containing 25 wt% AMP and 25wt% ethanolamine (MEA), and RA3 containing 5M (30 wt%) MEA.

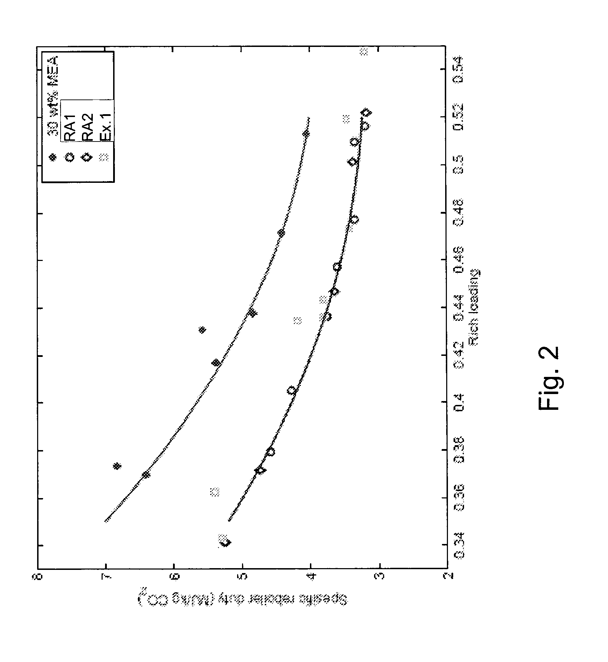

The results from the comparison of the different absorbents are shown in figure 2. It may be seen from figure 2 that the present absorbent (Ex. 1) has a specific reboiler duty that substantially equal to the reboiler duty of RA1 and RA2, and about 30% lower than RA3. Accordingly, Ex.1 has a reboiler duty, and thus expected energy demand in the process that is about 30% lower than the most used reference absorbent, 30wt% MEA, or RA3.

## Screening of absorption rate and capacity

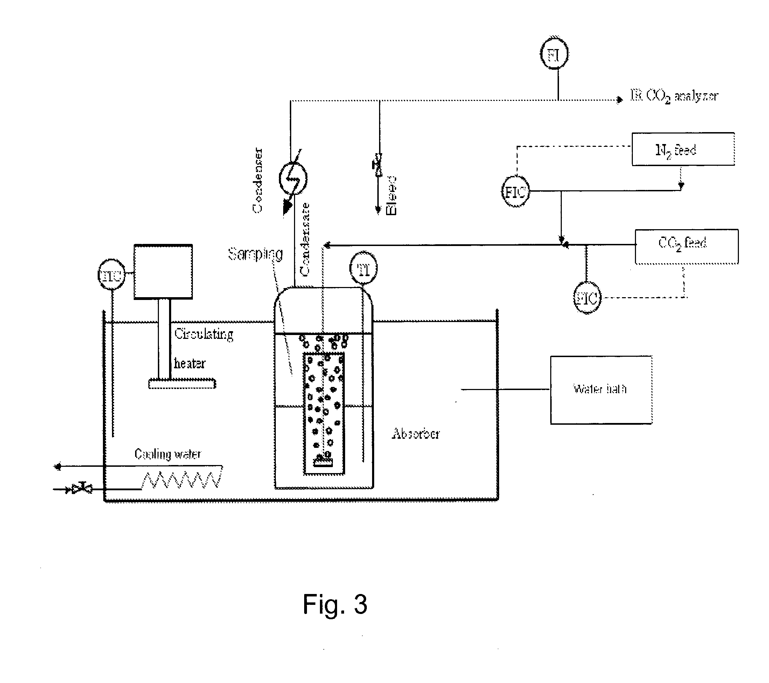

A screening apparatus as illustrated in figure 3 was used for screening of possible solvents. The apparatus is used for fast comparison of the rate of absorption and the absorption capacity of solvents that is assumed to have a potential for utilization in an industrial absorption process.

The apparatus comprises a lab scale absorber arranged in a water bath equipped with heating and cooling connected to a temperature control system. An artificial exhaust gas comprising $N_2$ (90%) and $CO_2$ (10%) is bubbled through a solvent in the lab scale absorber. The not absorbed gas from the absorber is withdrawn, condensed in a condenser and the composition ($N_2$ to $CO_2$) of the gas is measured. Additionally, samples of the solvent in the absorber is taken and analyzed.

The solvent is initially unloaded, and will absorb until equilibrium is met with the partial pressure of CO in the gas (0.1 bar). The resulting absorption curve shows the rate as function of CO2-loading from the maximum rate in unloaded solution, to zero at equilibrium.

The experiments using this method are a first step in observing the characteristics of an absorption system.

*Principle of operation*

The mass transfer screening apparatus is used to measure the absorption rate of CO2 at 40°C. A mixture of 10 vol% CO2 in N2 is made by pre-calibrated mass-flow controllers, and enters the absorption bottle, containing 750 ml of the solvent to be tested. The gas is distributed through a sintered glass which creates gas-bubbles rising up through the liquid. From the surface of these bubbles, CO2 is first absorbed into the liquid at 40°C until 95% of equilibrium, corresponding to 9.5% CO2 in the effluent gas, is obtained.

After each experiment the accumulated weight of liquid is measured and compared with the net absorbed amount of CO2. This is to assure that no solvent is lost by evaporation. Samples of the solvent are also taken for CO2 analysis after the absorption and desorption sequence.

The CO2 analyzer is regularly calibrated, using gases of known composition with 2-4 points in the range 0-10%. As the IR analyzer is slightly sensitive to the barometric pressure, an automatic calibration, as part of the automatic control sequence, is performed. The 10% feed gas flows directly to the analyzer and a correction factor is calculated to account for these variations.

*Calculation of the rate of absorption*

At a given time, the rate of absorption is calculated as follows:

$$Q_{CO_2}^{abs} = Q_{CO_2}^{MFC} - Q_{N_2}\left(\frac{Cv_{CO_2}}{1-Cv_{CO_2}}\right)$$

where $Q_{CO2}^{abs}$ [Nl/min] is the flow of $CO_2$ corresponding to the absorption into the liquid phase. $Q_{CO2}^{MFC}$ [Nl/min] is the feed flow of $CO_2$ from the mass-flow controller (0.5 Nl/min).

$Q_{N_2}$ [Nl/min] is the feed flow of $N_2$ from the mass flow controller (4.5 Nl/min). $vco_2$ is the volume fraction of $CO_2$ in the gas leaving the absorption bottle, as measured by the IR $CO_2$ analyzer.

C is the calibration factor accounting for variations in the analyzer signal, mainly as a result of barometric pressure variations.

The value of $Q_{CO2}^{abs}$ is logged as a function of time (every second) and these data are integrated to give the accumulated amount of $CO_2$:

$$N_{CO_2}^{acc} = \int_0^t Q_{CO_2}^{abs} dt$$

These data are recalculated to give the rate of absorption as a function of $CO_2$ loading, as follows:

$$r_{CO_2} = \frac{Q_{CO_2}^{abs}}{v_m V_L}$$

where

$r_{CO_2}$ [mole/(l, min)] is the rate of absorption of $CO_2$

$v_m$ is the molar volume of ideal gas at normal conditions (22.41 Nl/mole)

$V_L$ is the volume of liquid in the absorber

The corresponding loading is calculated from:

$$y = \frac{N_{CO_2}^{acc}}{v_m V_L c_B}$$

where

$y$ [mole/mole] is the $CO_2$ loading (mole $CO_2$/mole reactive component)

$c_B$[mole/l] is the molar concentration of the reactive component (amine or other)

$c_B$[mole/l] is the molar concentration of the reactive component (amine or other)

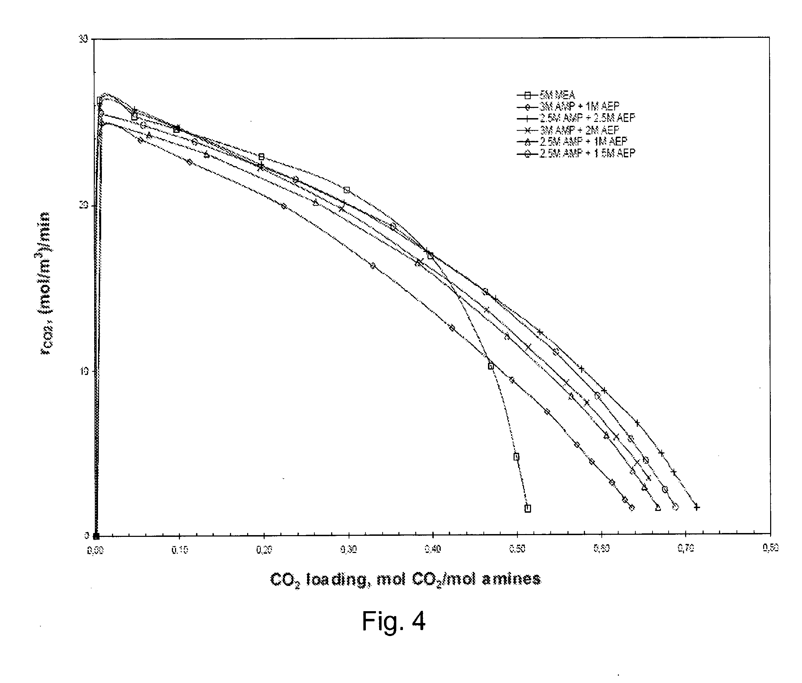

The results for different concentrations of AMP and AEP, and of 5M MEA are illustrated in figure 4.

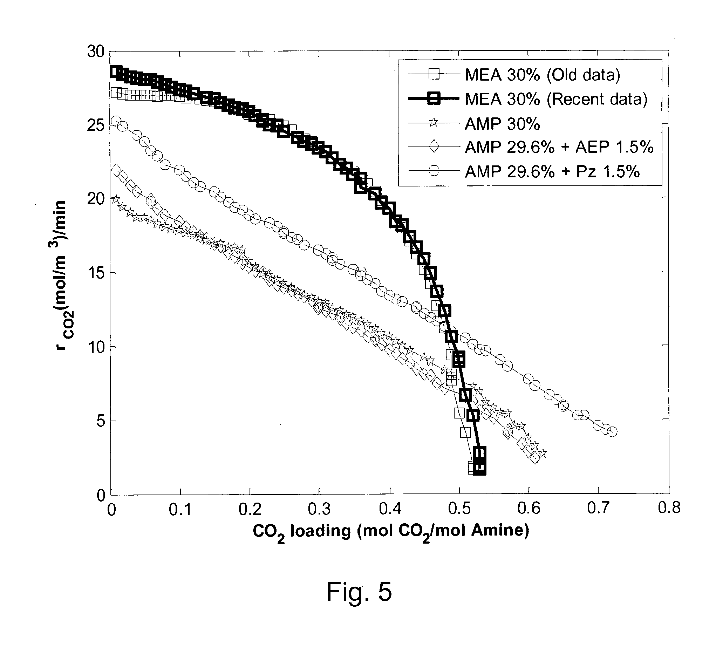

The results for comparative examples of 30 % by weight of AMP (corresponding to 3.4 M), AMP plus 1.5 % by weight of AEP and piperazine, respectively, and two runs of 30% by weight, or 5 M, MEA, are illustrated in figure 5. The results for MEA 30% (old data) represents the data from the earlier test run illustrated in figure 4, to confirm reproducibility of the results at different dates.

The results confirms that rate of absorption of $CO_2$ for the tested concentrations of AMP + AEP according to the present invention, are close to the rate of absorption for MEA and that the absorbent according to the present invention has higher absorption capacity per mole amine.

**Equilibrium measurements**

Absorption equilibrium measurements of corresponding values of liquid $CO_2$ loading and $CO_2$ partial pressure in gas phase at different temperatures, 40, 60, 80, 100 and 120 °C, were measured.

Measurements up to 80 °C were performed in an apparatus as illustrated in figure 5, whereas measurements over 80 °C were performed in a high pressure apparatus.

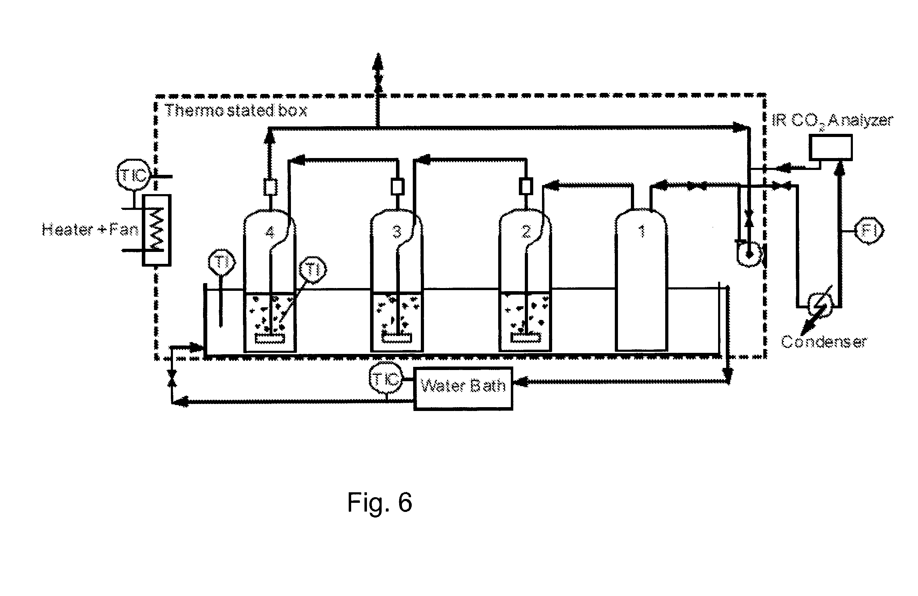

The apparatus according to figure 6 wherein artificial exhaust as described above, is circulated a thermostated apparatus. It comprises 3 gas washing bottles with a sintered glass gas sparger placed in series (2, 3, 4 in Figure 6). At the start of each experiment a sample preloaded with $CO_2$ is fed into the bottles. The bottles were heated with water and placed in a heated cabinet with a temperature accuracy measured to within 0.1 °C. The gas phase was circulated through the system, and the gas sparger system serves the purpose of a fast approach to equilibrium. Equilibrium was obtained when

the IR $CO_2$-analyzer showed a constant value. This took approximately 30 to 60 min. A liquid sample was then withdrawn from bottle 4 to be analyzed.

The $CO_2$ partial pressure is calculated from the reading of the gas analyzer. Because of the sample gas conditioning, this value is on a dry basis and has to be corrected for the vapor pressure at experimental conditions:

$$p_{CO_2} = x_{CO_2}^{dry} \left( P - p_{sol} + p_{cond} \right)$$

where $x_{CO2}^{dry}$ is the mole fraction read from the analyzer, P is the total pressure of the apparatus (equal to the ambient pressure), $p_{sol}$ is the vapor pressure of the solvent at experimental conditions, and $p_{cond}$ is the vapor pressure after the sample gas condenser where the gas is cooled to 10-13 °C.

The apparatus for equilibrium measurements at high temperature and pressure consists of two jacketed vessels with volumes 1.1 8 and 0.330 l, respectively. The smaller vessel is filled with 10 mm ceramic Berl saddles. Thermostated heating oil serves as heating medium. The vessels are connected and mounted in a framework which allows them to be rotated 180 degrees in a vertical plane, so that the vessels change place. The loaded solvent is thereby forced to flow from one vessel to the other. The tilting frequency as well as the length of the standstill periods is governed by an electronically controlled pneumatic piston cylinder.

The experiments are performed by first flushing the empty cylinders with pure $CO_2$ at a pressure of 4-5 bar. 200 ml of solution is then pumped into the smaller vessel. When the proper temperature is reached, the desired partial pressure is adjusted on the gas flask reduction valve, and the rotation is started. After 1 hour the $CO_2$ feed is closed and 1-2 hours are left for establishing and stabilizing equilibrium, which is indicated by a stable system pressure. A liquid sample is then withdrawn to measure the $CO_2$ loading. For this purpose a sample cylinder preloaded with unreacted solvent is used in order to stabilize the sample.

The equilibrium $CO_2$ partial pressure is calculated as the difference of the measured total pressure and the solvent vapor pressure.

$$p_{CO_2} = P - p_{vap}$$

The solvent vapor pressure is normally estimated by Raoult's law:

$$p_{vap} = x_w P_w^0 + x_{am} P_{am}^0$$

The application of Raoult's law implies an assumption of ideal mixture, which is normally not the case for amine/water mixtures. However, the mole fraction of water is always close to, or higher than 0.85-0.9 in these solvents. This, combined with the fact that most amines considered have a very small vapor pressure compared to water implies that the total vapor pressure of the solvent is very close to the value resulting from Raoult's law only accounting for the water contribution.

The results from the equilibrium measurements for a solvent comprising 3M AMP and 1 M AEP is shown in figure 6. In figure 6, the points represent the measurements, whereas the solid lines represent values calculated from an empirical equilibrium model.

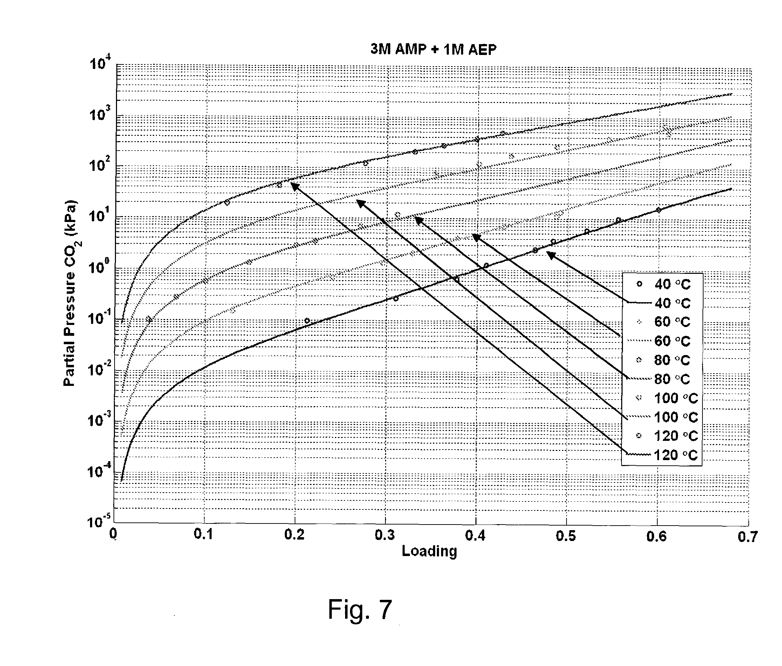

The equilibrium measurements are indicative for the cyclic capacity of the solvent. The results illustrated in figure 7 clearly illustrates the difference in absorption capacity at different temperatures at the same partial pressure of $CO_2$, and gives an indication that the solvent is a promising candidate solvent for industrial $CO_2$ capture plants.

**Chemical stability**

Chemical stability is a very important characteristic for the absorbent. The amine will degrade and produce degradation products. This will increase the operating cost of the system due cost of make-up amine and cost of disposal of degradation products. The degradation products may also impact the performance of the process and cause corrosion.

Thermal degradation is normally avoided by controlling the operating temperature of the stripper. The main challenge in $CO_2$ capture is oxidative degradation. MEA degrades rapidly in contact with oxygen with a typical rate of 2 kg per ton $CO_2$ captured. Tests have been performed on a mixture of AMP and AEP. Air has been bubbled through the mixture at 50°C and the concentration of amine is monitored over 250 hours. It can be seen from the chart that no degradation of the amine is identified.

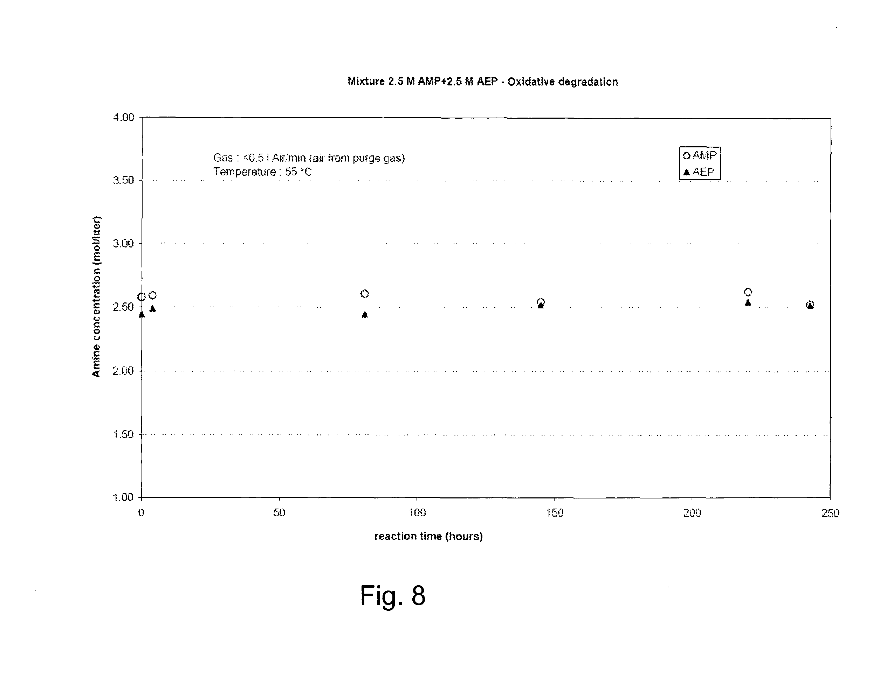

Figure 8 illustrates the oxidative degradation of AMP and AEP as a function of reaction time, and confirms that a combination of AMP and AEP is promising from a degradation point of view.

**Discussion**

For the present solvent for $CO_2$ capture it was decided to perform the tests pilot plant runs with a concentration of 3M AMP and 1 M AEP. The tests have confirmed that AEP is an effective promoter for AMP. Higher concentrations of AEP are expected to increase the absorption rate of the solvent but will also increase the viscosity of the solvent.

A concentration of 3M AMP + 1 M AEP is, based on the present results, assumed to be an effective solvent, especially for exhaust gases having a relatively high concentration of $CO_2$, such as exhaust gas from a typical coal fired plant, typically containing 12 to 14% $CO_2$, whereas a system having a higher concentration of AEP and thus faster kinetics, may be preferable for an exhaust gas from a typical natural gas fired gas turbine, having a $CO_2$ concentration typically from 3 to 5 %.

It was interesting to find that the present absorbent had surprisingly good characteristics, results that could not be expected or foreseen from the prior art were use of AEP as a promoter in an amount of about 1.5 % by weight, or 0.1 M, has been suggested. The comparative results using 1.5 % AEP in MEA solution gave no, or a marginal increase in the absorption. Piperazine, on the other hand, showed a good effect as a promoter at the same concentration. The skilled man would therefore not get any information, hints or inspiration from EP0875280 to arrive at the present invention.

The experiments done so far have confirmed that the present solvent is a promising solvent for $CO_2$ capture from an exhaust gas. Further experiments have to be performed. The properties of the solvent as an industrially viable solvent for commercial $CO_2$ capture will finally be tested on a full height pilot plant for a period of at least three months.

**Claims**

1. A $CO_2$ absorbent, comprising an aqueous solution of 2-amino-2-methylpropanol (AMP) and 1-(2-aminoethyl) -piperazine (AEP), wherein the molar concentration of AMP is between 4.5M and 2 M, and the molar concentration of AEP is between 0.5 M and 2 M.

2. The absorbent according to claim 1, wherein the total molar concentrations of AMP and AEP is between 3 and 5.

3. The absorbent according to claim 1 or 2, wherein the concentration of AMP is between 4 and 2.5 M.

4. The absorbent according to any of the preceding claims, wherein the concentration of AEP is between 0.8 M and 1.5 M.

5. The absorbent of claim 1, comprising 3M AMP and 1 M AEP.

6. A method for capturing $CO_2$ from an exhaust gas, wherein the exhaust gas is contacted with a liquid absorbent comprising an aqueous solution of 2-amino-2-methylpropanol (AMP) and 1-(2-aminoethyl) -piperazine (AEP), wherein the molar concentration of AMP is between 4.5M and 2 M, and the molar concentration of AEP is between 0.5 M and 2 M.

7. The method of claim 6, wherein the total molar concentrations of AMP and AEP is between 3 and 5.

8. The method of claim 6 or 7, wherein the concentration of AMP is between 4 and 2.5 M.

9. The method according to any of the claims 6 to 8, wherein the concentration of AEP is between 0.8 M and 1.5 M.

10. The method of claim 6, wherein the concentrations of AMP and AEP are 3M AMP and 1 M AEP.

**Patentansprüche**

1. $CO_2$-Absorbens, umfassend eine wässrige Lösung von 2-Amino-2-Methylpropanol (AMP) und 1-(2-Aminoethyl) -Piperazin (AEP), wobei die Molarität von AMP zwischen 4, 5 M und 2 M und die Molarität von AEP zwischen 0, 5 M und 2 M beträgt.

2. Absorbens nach Anspruch 1, wobei die Gesamtmolarität von AMP und AEP zwischen 3 und 5 beträgt.

3. Absorbens nach Anspruch 1 oder 2, wobei die Konzentration von AMP zwischen 4 und 2,5 M beträgt.

4. Absorbens nach einem der vorhergehenden Ansprüche, wobei die Konzentration von AEP zwischen 0,8 M und 1,5 M beträgt.

5. Absorbens nach Anspruch 1, umfassend 3 M AMP und 1 M AEP.

6. Verfahren zum Abscheiden von $CO_2$ aus einem Abgas, wobei das Abgas mit einem flüssigen Absorbens in Berührung kommt, welches eine wässrige Lösung von 2-Amino-2-Methylpropanol (AMP) und 1-(2-Aminoethyl) -Piperazin (AEP) umfasst, wobei die Molarität von AMP zwischen 4, 5 M und 2 M und die Molarität von AEP zwischen 0, 5 M und 2 M beträgt.

7. Verfahren nach Anspruch 6, wobei die Gesamtmolarität von AMP und AEP zwischen 3 und 5 beträgt.

8. Verfahren nach Anspruch 6 oder 7, wobei die Konzentration von AMP zwischen 4 und 2,5 M beträgt.

9. Verfahren nach einem der Ansprüche 6 bis 8, wobei die Konzentration von AEP zwischen 0,8 M und 1,5 M beträgt.

10. Verfahren nach Anspruch 6, wobei die Konzentrationen von AMP und AEP 3 M AMP und 1 M AEP betragen.

**Revendications**

1. Absorbant de CO2, comprenant une solution aqueuse constituée de 2-amino-2 méthylpropanol (AMP) et de 1-(2-aminoéthyl) -pipérazine (AEP), dans lequel la concentration molaire de AMP est entre 4, 5 M et 2 M, et la concentration molaire de AEP est entre 0, 5 M et 2 M.

2. Absorbant selon la revendication 1, dans lequel la concentration molaire totale de AMP et de AEP est entre 3 et 5.

3. Absorbant selon les revendications 1 ou 2, dans lequel la concentration de AMP est entre 4 et 2,5 M.

4. Absorbant selon l'une quelconque des revendications précédentes, dans lequel la concentration de AEP est entre 0,8 M et 1,5 M.

5. Absorbant selon la revendication 1, comprenant AMP 3 M et AEP 1 M.

6. Procédé pour capturer du CO2 à partir de gaz d'échappement, dans lequel les gaz d'échappement sont en contact avec un absorbant liquide comprenant une solution aqueuse de 2-amino-2 méthylpropanol (AMP) et de 1-(2-aminoéthyl) -pipérazine (AEP), dans lequel la concentration molaire de AMP est entre 4, 5 M et 2 M, et la concentration molaire de AEP est entre 0, 5 M et 2 M.

7. Procédé selon la revendication 6, dans lequel la concentration molaire totale de AMP et de AEP est entre 3 et 5.

8. Procédé selon les revendications 6 ou 7, dans lequel la concentration de AMP est entre 4 et 2,5 M.

9. Procédé selon l'une quelconque des revendications 6 à 8, dans lequel la concentration de AEP est entre 0,8 M et 1,5 M.

10. Procédé selon la revendication 6, dans lequel les concentrations de AMP et de AEP sont AMP 3 M et AEP 1 M

Fig. 1

Fig. 2

Fig. 3

Fig. 4

Fig. 5

Fig. 6

Fig. 7

EP 2 480 311 B1

Mixture 2.5 M AMP+2.5 M AEP - Oxidative degradation

Fig. 8

## REFERENCES CITED IN THE DESCRIPTION

### Patent documents cited in the description

- US 5618506 A
- EP 0558019 A
- EP 875280 A
- EP 0875280 A

### Non-patent literature cited in the description

- **SEXTON, ANDREW J. et al.** Catalysts and inhibitors for MEA oxidation. *Energy Procedia,* 2009, vol. 1, 1179-1185